# FASCICULE DE BREVET EUROPEEN

(11) **EP 3 345 286 B1**
(45) Date de publication et mention de la délivrance du brevet: **11.08.2021**
(21) Numéro de dépôt: 16775274.0
(22) Date de dépôt: 30.08.2016
(51) Int. Cl.: H02K 11/33, H02K 15/00, H02K 5/22, H02K 5/10

(54) **UNITÉ DE CONTRÔLE DESTINÉE À CONTRÔLER UNE MACHINE ÉLECTRIQUE**
ANTRIEBSEINHEIT ZUR REGELUNG EINER ELEKTRISCHEN MASCHINE
DRIVE UNIT FOR CONTROLLING AN ELECTRIC MACHINE

(30) Priorité: 03.09.2015 FR 1558145
(43) Date de publication de la demande: 11.07.2018
(73) Titulaire: Valeo Systèmes de Contrôle Moteur, 95800 Cergy Saint Christophe (FR)
(72) Inventeur: LUCY, Anthony, 95892 Cergy-Pontoise (FR)
(74) Mandataire: Mozelle, Gérard Jacques
(86) Numéro de dépôt international: PCT/FR2016/052139
(87) Numéro de publication internationale: WO 2017/037375

(56) Documents cités:
- EP-A1- 0 868 008
- EP-A1- 2 043 234
- EP-A1- 2 226 922
- DE-A1-102007 034 325
- FR-A1- 2 924 084

## Description

La présente invention concerne une unité de contrôle destinée à contrôler une machine électrique, notamment pour véhicule automobile, et une machine électrique tournante dont les connecteurs de phases sont reliés à une unité de contrôle selon l'invention. L'invention concerne également un équipement électrique comprenant l'unité de contrôle selon l'invention et un compresseur de suralimentation électrique comprenant l'équipement électrique.

Dans le cas d'un moteur diesel, le temps de latence d'un compresseur de suralimentation à gaz est responsable de l'émission de particules quand, dans une phase d'accélération à bas régime, le système d'injection essaie de fournir la puissance demandée en injectant un surplus de carburant.

Les machines électriques sont de plus en plus présentes dans les véhicules automobiles. En particulier, des considérations écologiques, et notamment la lutte contre le réchauffement climatique en réduisant les émissions de CO₂, ont amené les équipementiers à proposer aux constructeurs d'automobiles des compresseurs de suralimentation électriques qui améliorent la réponse dynamique des moteurs à combustion interne de faible cylindrée à bas régime.

A la différence des compresseurs de suralimentation classiques entraînés par les gaz d'échappement, le compresseur de suralimentation électrique, c'est-à-dire entraîné par un moteur électrique, présente un temps de réponse instantané, et améliore le couple moteur à bas régime et l'accélération.

Ce système permet de réduire considérablement la cylindrée des moteurs thermiques, et par conséquent de réduire la consommation de carburant.

En particulier, la société VALEO SYSTEMES DE CONTROLE MOTEUR propose dans sa demande de brevet internationale WO 2013/045821 la mise en œuvre d'un compresseur de suralimentation électrique pour assister le turbocompresseur à gaz au moment de l'enfoncement de la pédale d'accélérateur.

Le compresseur de suralimentation électrique est contrôlé par une unité de contrôle comprenant une carte électronique de contrôle et une carte électronique de puissance.

Les documents DE 102007034325 et EP 2226922 A1 décrivent des unités de contrôle de moteurs électriques selon l'art antérieur.

Compte-tenu de la différence de fonction et de comportement entre la carte de puissance et la carte de contrôle, il est préférable que les deux cartes soient distinctes l'une de l'autre. Cependant, l'espace alloué pour le dispositif électronique du compresseur de suralimentation électrique étant limité, les cartes doivent être suffisamment proches pour assurer une bonne connexion entre elles et occuper le moins d'espace possible dans l'ensemble final tout en évitant le contact entre les composants des deux cartes. L'espace entre les cartes nécessite donc d'être précisément maitrisé.

De plus, compte tenu de la complexité grandissante de l'électronique des cartes, les constructeurs demandent de plus en plus à recevoir une unité de contrôle autonome. Le constructeur n'ayant plus qu'à relier électriquement les connecteurs de phases et de contrôle.

Ces connexions sont généralement réalisées par soudure. Lors de la soudure, il peut y avoir des projections de matériau de soudure risquant d'endommager l'unité de contrôle.

Il existe donc un besoin pour une unité de contrôle destinée à contrôler une machine électrique qui puisse être connectée à la machine électrique sans risque d'endommager l'électronique de l'unité de contrôle.

La présente invention vise à proposer une unité de contrôle répondant à ce besoin.

A cet effet, la présente invention a pour objet une unité de contrôle destinée à contrôler une machine électrique, notamment pour véhicule automobile, l'unité de contrôle comprenant :
- un boitier comprenant une base recevant au moins une unité électronique de puissance, l'unité électronique de puissance comprenant au moins un connecteur destiné à être connecté électriquement à un connecteur correspondant de la machine électrique,
- un couvercle primaire fermant le boitier,
remarquable en ce que
l'unité de contrôle comprend au moins un passage traversant entre la base et le couvercle primaire à travers lequel passe ledit connecteur de l'unité électronique de puissance, et destiné à recevoir le connecteur correspondant de la machine électrique.

En particulier, le passage forme un trou traversant entre la base et le couvercle primaire.

Avantageusement, la configuration de l'unité de contrôle selon l'invention permet de protéger l'unité électronique de puissance lors de la connexion, en particulier par soudure, du ou des connecteurs de l'unité électronique de puissance avec le ou les connecteurs correspondants de la machine électrique. En particulier, la disposition du au moins un passage traversant permet de disposer correctement les connecteurs à connecter. Le couvercle primaire permet de s'assurer qu'aucune projections de soudure n'endommage l'unité électronique de puissance présente dans le boitier.

L'unité de contrôle selon l'invention peut également comprendre une ou plusieurs des caractéristiques ci-dessous, considérées individuellement ou selon toutes les combinaisons techniquement possibles :
- le au moins un passage traversant comprend une paroi périphérique issue du couvercle primaire ou de la base ou des deux ; et/ou
- le au moins un passage traversant comprend au moins un élément d'étanchéité, par exemple une résine, un joint à lèvre, un joint torique, autour du ou des connecteurs de l'unité électronique de puissance et de la machine électrique, disposé pour permettre de rendre étanche ledit passage vis-à-vis de l'intérieur de l'unité de contrôle ; et/ou
- le au moins un élément d'étanchéité est disposé pour assurer une étanchéité entre le couvercle primaire et la base au niveau du au moins un passage traversant ; et/ou
- la base du boitier est destinée à être fixée à la machine électrique ; et/ou
- le couvercle primaire comprend une cavité au niveau du au moins un passage traversant, ladite cavité étant configurée pour permettre l'accès aux connecteurs de l'unité électronique de puissance et de la machine électrique, notamment par un outil de soudure, par exemple outil de soudure électrique, par vague, laser ; et/ou
- l'unité de contrôle comprend en outre un couvercle secondaire permettant de fermer ladite cavité, notamment de manière étanche ; et/ou
- ladite cavité est remplie au moins en partie d'un matériau isolant électriquement et/ou thermiquement, par exemple résine ou gel ; et/ou
- le couvercle primaire est fixé de manière étanche à la base du boitier ; et/ou
- le au moins un passage traversant est dimensionné au plus près des connecteurs de l'unité électronique de puissance et de la machine électrique ; et/ou
- le au moins un passage traversant est dimensionné de sorte à permettre un jeu de moins de 3 mm, de préférence d'environ 1mm, autour des connecteurs de l'unité électronique de puissance et de la machine électrique ; et/ou
- l'unité de contrôle est destinée à contrôler une machine électrique tournante et dans laquelle les connecteurs de l'unité électronique de puissance et de la machine électrique sont des connecteurs de phase.

L'invention se rapporte également à une machine électrique tournante, notamment pour véhicule automobile, comprenant des connecteurs de phases au niveau de son axe principal reliés aux connecteurs de phases d'une unité de contrôle selon l'invention.

L'invention se rapporte en outre à un équipement électrique comprenant :
- une machine électrique tournante logée dans un boîtier, et comportant au moins un connecteur de phase au niveau de son axe principal,
- une unité de contrôle selon l'invention,
dans lequel le boitier de l'unité de contrôle est rapporté sur le boîtier de la machine électrique de sorte que le connecteur de phase de la machine électrique est reçu dans le passage de l'unité de contrôle en vis-à-vis du connecteur de l'unité électronique de puissance pour une connexion électrique avec ledit connecteur de l'unité électronique de puissance.

En particulier, le boitier de l'unité de contrôle est rapporté sur le boîtier de la machine, en fixant la base du boîtier de l'unité de contrôle sur le boîtier de la machine électrique. Notamment, le boitier de l'unité de contrôle est rapporté sur une extrémité axiale du boitier de la machine.

Notamment, l'axe principal de la machine électrique tournante désigne son axe de rotation.

L'invention se rapporte aussi à un compresseur de suralimentation électrique comprenant une roue de compression de gaz et un équipement électrique selon l'invention configuré de sorte à entrainer la roue de compression de gaz.

L'invention sera mieux comprise à la lumière de la description suivante qui n'est donnée qu'à titre indicatif et qui n'a pas pour but de limiter ladite invention, accompagnée des figures ci-dessous :
- La figure 1 est une vue éclatée d'un compresseur de suralimentation électrique,
- La figure 2 est une représentation schématique d'un mode de réalisation de l'invention,
- Le figure 3 est une représentation de la soudure d'un connecteur d'une unité de contrôle selon l'invention avec un connecteur correspondant d'une machine électrique,
- La figure 4 est une représentation d'une unité de contrôle selon un mode de réalisation après la fixation de l'unité de contrôle à une machine électrique, et
- La figure 5 est une représentation d'un compresseur de suralimentations selon l'invention.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

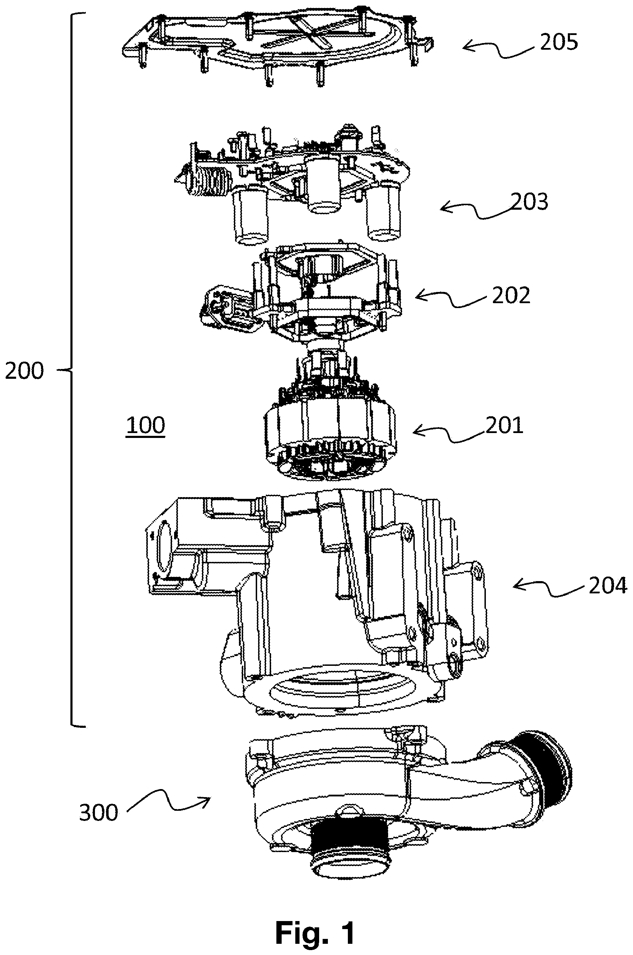

Un exemple de compresseur de suralimentation 100 de véhicule automobile destiné à un système de suralimentation d'un moteur thermique selon un mode de réalisation de l'art antérieur est représenté sur la figure 1.

Comme représenté sur la figure 1, le compresseur de suralimentation 100 comprend un équipement électrique 200 et une volute 300 accouplée audit équipement électrique 200.

Comme illustré sur la figure 1, l'équipement électrique 200 comprend une machine électrique tournante 201 dont les phases sont connectées, par exemple via un dispositif de connexion 202 à une unité de contrôle 203 comprenant une carte électrique de puissance et une carte électronique de contrôle. L'ensemble de ces éléments est disposé à l'intérieur d'un boîtier 204 fermé par un couvercle 205.

Le contrôle du compresseur de suralimentation 100 de la figure 1 est réalisé par une unité de contrôle 203 introduite dans le boitier 204. L'unité de contrôle 203 n'est pas une unité de contrôle indépendante protégée par son propre boitier. Ainsi, le montage du compresseur de suralimentation 200 requière une grande attention pour ne pas endommager l'unité de contrôle lors du montage et de sa connexion électrique aux connecteurs de la machine électrique 201.

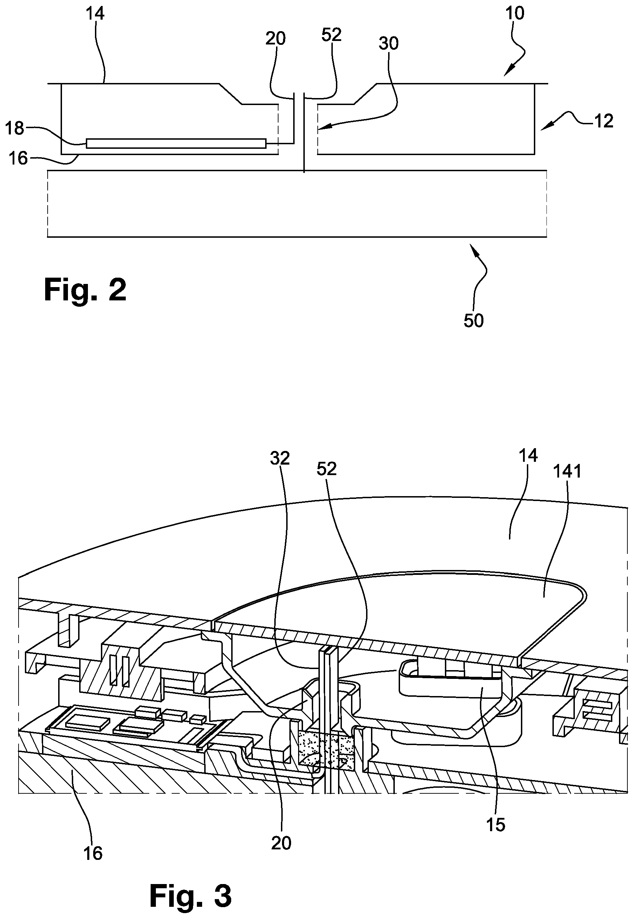

La figure 2 est une représentation schématique d'une unité de contrôle 10 selon l'invention destinée à contrôler une machine électrique 50, notamment une machine électrique tournante.

Comme illustré sur la figure 2, l'unité de contrôle selon l'invention comprend un boitier 12 et un couvercle primaire 14 fermant le boitier 12.

Le boitier 12 comprend une base 16 recevant une unité électronique de puissance 18, par exemple une carte électronique de puissance.

Selon un mode de réalisation préféré de l'invention, la base 16 du boitier 12 est destinée à être fixée à la machine électrique 50, par exemple par vissage, afin de réduire l'encombrement et les jeux mécaniques entre l'unité de contrôle et la machine électrique.

Afin de commander électriquement la carte électronique de puissance, un second circuit peut être utilisé. Ce second circuit comprend par exemple une carte électronique de contrôle, placée au-dessus de la carte de puissance pour faciliter la connexion entre les deux cartes, et notamment placée à l'intérieur du boitier 12.

Compte-tenu de la différence de fonction et de comportement entre la carte électronique de puissance et la carte électronique de contrôle, il est préférable que les deux cartes soient distinctes l'une de l'autre. Cependant, l'espace alloué pour l'unité de contrôle étant limité, les cartes doivent être suffisamment proches pour assurer une bonne connexion entre elles et occuper le moins d'espace possible dans l'ensemble final.

L'unité électronique de puissance comprend au moins un connecteur 20, généralement plusieurs, destiné à être connecté électriquement à au moins un connecteur correspondant 52 de la machine électrique 50. Le connecteur 20 est typiquement un connecteur de phase destiné à être connecté à une phase de la machine électrique 50. Dans le cas d'un connecteur de phase, l'unité de contrôle peut comprendre une pluralité de connecteurs, par exemple 3 ou 6 connecteurs.

L'unité de contrôle comprend au moins un passage traversant 30 entre la base et le couvercle primaire à travers lequel passe le connecteur 20 de l'unité électronique de puissance. Le passage traversant est également destiné à recevoir au moins un connecteur correspondant 52 d'une machine électrique 50.

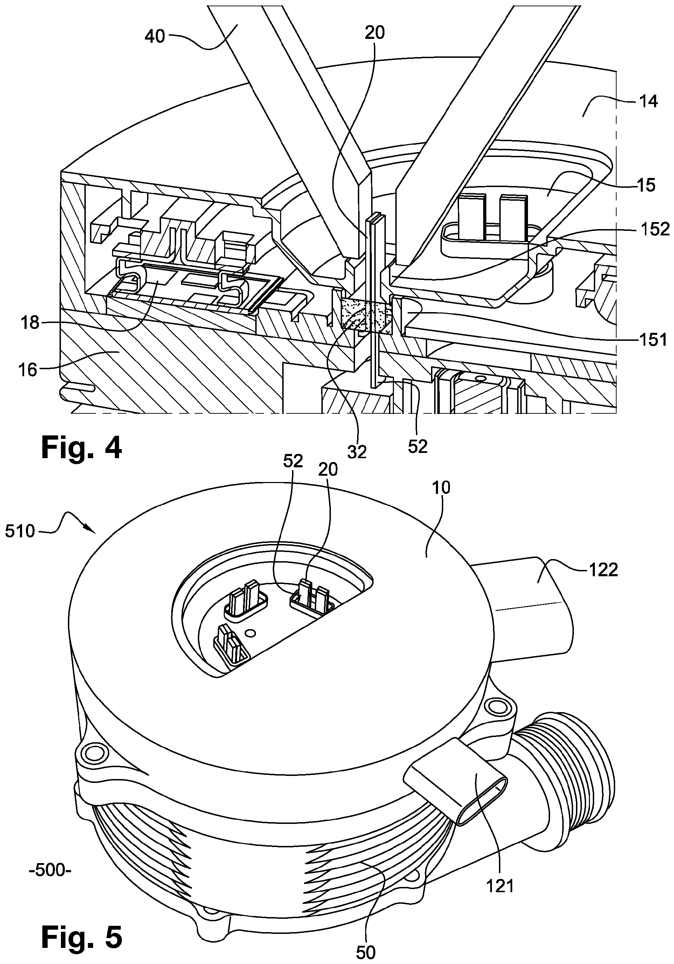

Il est possible, comme présenté en figures 3 et 4, de prévoir une configuration selon laquelle plusieurs connecteurs de phases, par exemple 2 ou 3, sont disposés dans un même passage traversant.

Le connecteur 20 de l'unité électronique de puissance et le connecteur correspondant 52 de la machine électrique sont connectés électriquement afin de permettre le contrôle de la machine électrique par l'unité de contrôle 10. Cette connexion électrique est typiquement assurée par une soudure des deux connecteurs entre eux.

Avantageusement, la configuration de l'unité de contrôle 10 selon l'invention permet de protéger les cartes électroniques présentes dans le boitier 12 lors des opérations de soudure. En effet, les opérations de soudure peuvent provoquer des projections de particules conductrices qui, si elles atteignent les cartes électroniques, risquent de les endommager.

Le fait d'avoir une unité de contrôle ayant un passage traversant recevant les connecteurs de l'unité électronique et les connecteurs correspondants de la machine électrique permet de réduire l'encombrement de l'unité de contrôle. L'utilisation d'un couvercle primaire fermant le boitier et traversé par le passage traversant permet d'assurer à la fois un encombrement réduit et une protection des cartes électroniques comprises dans le boitier 12 lors de l'opération de soudure.

Afin d'assurer une protection contre les projections d'eau ou de poussières, le couvercle primaire 14 est fixé de manière étanche à la base du boitier.

Comme représenté aux figures 2 et 3, le couvercle primaire peut comprendre une cavité 15 au niveau du au moins un passage traversant 30. La cavité 15 est configurée pour permettre l'accès aux connecteurs de l'unité électronique de puissance et de la machine électrique notamment par un outil de soudure 40, par exemple par un outil de soudure électrique, par vague ou par laser. Avantageusement, ce mode de réalisation permet d'assurer un faible encombrement de la machine électrique après le montage avec l'unité de contrôle.

Comme illustré en figure 4, lorsque le couvercle primaire de l'unité de contrôle comprend une cavité 15, l'unité de contrôle peut comprendre également un couvercle secondaire 141 permettant de fermer la cavité 15. Selon un mode de réalisation préféré, le couvercle secondaire 141 permet de fermer de manière étanche la cavité 15 après la soudure des connecteurs. Avantageusement, le couvercle secondaire permet de protéger les connecteurs aussi bien des risques de chocs lors de la manipulation de la machine électrique que des projections lors de l'utilisation de la machine électrique.

Afin d'assurer une étanchéité parfaite entre les connecteurs et entre l'intérieur du boitier de l'unité de contrôle et l'extérieur, la cavité 15 peut être remplie, au moins en partie, par exemple à moitié ou totalement, d'un matériau isolant électriquement et/ou thermiquement, comme une résine ou un gel.

Selon un mode de réalisation non représenté, le couvercle primaire peut être plan. Afin d'assurer un accès aux connecteurs de l'unité électronique de puissance et de la machine électrique notamment par un outil de soudure 40, les connecteurs doivent s'étendre suffisamment au-delà du couvercle primaire. Avantageusement, le couvercle primaire de ce mode de réalisation est plus simple et donc moins couteux.

Comme représenté en figures 3 et 4, le passage traversant 30 comprend une paroi périphérique 151 issue de la base 12 et une paroi périphérique 152 issue du couvercle primaire 14.

De préférence, le passage traversant 30 est dimensionné au plus près des connecteurs de l'unité électronique de puissance et de la machine électrique afin de réduire les risques de projection atteignant l'intérieur du boitier 12 lors de la soudure des connecteurs 20 et 52.

Typiquement, le passage traversant 30 est dimensionné de sorte à permettre un jeu de moins de 3 mm, de préférence d'environ 1mm, autour des connecteurs de l'unité électronique de puissance et de la machine électrique.

Comme représenté aux figures 3 et 4, le passage traversant 30 peut comprendre un élément d'étanchéité 32 autour des connecteurs de l'unité électronique de puissance et de la machine électrique. L'élément d'étanchéité peut être par exemple un joint à lèvre ou un joint torique. L'élément d'étanchéité peut également être rapporté suite au montage de l'unité de contrôle sur la machine électrique et à la soudure des connecteurs. Par exemple, une résine ou un gel peut être disposé dans le passage traversant 30 suite à la mise en place des connecteurs 20 et 52.

Avantageusement, l'élément d'étanchéité permet d'isoler le passage traversant de l'intérieur de l'unité de contrôle.

En outre, l'élément d'étanchéité peut être disposé pour assurer une étanchéité entre le couvercle primaire et la base au niveau du passage traversant.

La figure 5 représente un exemple de compresseur de suralimentation électrique 500 comprenant un équipement électrique 510 selon l'invention. Le compresseur de suralimentation électrique comprend en outre une roue destinée à compresser un gaz grâce à l'entrainement de la machine électrique 50. A cet effet, l'équipement électrique 510 comprend la machine électrique 50 sur laquelle l'unité de contrôle 10 est rapportée. En particulier, la base 16 du boitier 12 est fixée à la machine électrique 50, par exemple par vissage. Notamment, le boitier 12 de l'unité de contrôle 10 est rapporté sur une extrémité axiale du boitier de la machine électrique 50. Les connecteurs 52 de la machine électrique 50 sont reçus dans le passage 30 en vis-à-vis des connecteurs 20 de l'unité électronique de puissance pour une soudure comme décrit précédemment. Le boitier 12 de l'unité de contrôle 10 peut comprendre un connecteur électrique de signal 121 destiné à recevoir un signal électrique pour la commande des composants de l'unité électronique de puissance 18 et/ou la commande d'un circuit commandant l'unité électronique de puissance ; et un connecteur électrique de puissance 122 destiné à délivrer un courant électrique à la machine 50 par l'intermédiaire de l'unité électronique de puissance 18.

L'invention a été décrite ci-dessus avec l'aide de modes de réalisation présentés sur des figures, sans limitation du concept inventif général.

Bien d'autres modifications et variations se suggèrent d'elles même à l'homme du métier, après réflexion sur les différents modes de réalisation illustrés dans cette demande. Ces modes de réalisation sont donnés à titre d'exemple et ne sont pas destinés à limiter la portée de l'invention, qui est déterminée exclusivement par les revendications ci-dessous.

Dans les revendications, le mot « comprenant » n'exclut pas d'autres éléments ou étapes, et l'utilisation de l'article indéfini « un » ou « une » n'exclut pas une pluralité. Enfin, toute référence utilisée dans les revendications ne doit pas être interprétée comme limitation de la portée de l'invention.

## Revendications

1. Unité de contrôle (10) destinée à contrôler une machine électrique (50), notamment pour véhicule automobile, l'unité de contrôle (10) comprenant :
- au moins une unité électronique de puissance (18),
- un boîtier (12) comprenant une base (16) recevant ladite au moins une unité électronique de puissance (18), ladite unité électronique de puissance (18) comprenant au moins un connecteur (20) destiné à être connecté électriquement à un connecteur correspondant (52) de la machine électrique (50),
- un couvercle primaire (14) fermant le boîtier (12), **caractérisée en ce que** l'unité de contrôle (10) comprend au moins un passage traversant (30) entre la base (16) et le couvercle primaire (14) à travers lequel passe ledit connecteur (20) de l'unité électronique de puissance (18), et destiné à recevoir le connecteur correspondant (52) de la machine électrique (50), ledit au moins un passage traversant (30) comprenant une paroi périphérique issue (151, 152) du couvercle primaire (14) ou de la base (16) ou des deux.

2. Unité de contrôle (10) selon la revendication précédente dans laquelle le au moins un passage traversant (30) comprend au moins un élément d'étanchéité (32) autour du connecteur (20) de l'unité électronique de puissance (18) et de la machine électrique (50), disposé pour permettre de rendre étanche ledit passage (30) vis-à-vis de l'intérieur de l'unité de contrôle (10).

3. Unité de contrôle (10) selon la revendication précédente dans laquelle le au moins un élément d'étanchéité (32) est disposé pour assurer une étanchéité entre le couvercle primaire (14) et la base (16) au niveau du au moins un passage traversant (30).

4. Unité de contrôle (10) selon l'une quelconque des revendications précédentes dans laquelle la base (16) du boitier est destinée à être fixée à la machine électrique (50).

5. Unité de contrôle (10) selon l'une quelconque des revendications précédentes, dans laquelle le couvercle primaire (14) comprend une cavité (15) au niveau du au moins un passage traversant (30), ladite cavité (15) étant configurée pour permettre l'accès aux connecteurs (20) de l'unité électronique de puissance (18) et de la machine électrique (50), notamment par un outil de soudure (40).

6. Unité de contrôle (10) selon la revendication précédente, comprenant en outre un couvercle secondaire (141) permettant de fermer ladite cavité (15), notamment de manière étanche.

7. Unité de contrôle (10) selon l'une des revendications 5 ou 6, dans laquelle ladite cavité (15) est remplie au moins en partie d'un matériau isolant électriquement et/ou thermiquement.

8. Unité de contrôle (10) selon l'une des revendications précédentes, dans laquelle le couvercle primaire (14) est fixé de manière étanche à la base (16) du boitier.

9. Unité de contrôle (10) selon l'une quelconque des revendications précédentes, dans laquelle le au moins un passage traversant (30) est dimensionné au plus près des connecteurs (20, 52) de l'unité électronique de puissance (18) et de la machine électrique (50).

10. Unité de contrôle (10) selon l'une des revendications précédentes, dans laquelle le au moins un passage traversant (30) est dimensionné de sorte à permettre un jeu de moins de 3 mm autour des connecteurs (20, 52) de l'unité électronique de puissance (18) et de la machine électrique (50).

11. Unité de contrôle (10) selon l'une des revendications précédentes destinée à contrôler une machine électrique tournante (50) et dans laquelle les connecteurs (20, 52) de l'unité électronique de puissance (18) et de la machine électrique (50) sont des connecteurs de phase.

12. Equipement électrique (510) comprenant :
- une machine électrique tournante (50) logée dans un boîtier, et comportant au moins un connecteur de phase (52) au niveau de son axe principal,
- une unité de contrôle (10) selon l'une des revendications 1 à 11,
dans lequel le boitier (12) de l'unité de contrôle (10) est rapporté sur le boîtier de la machine électrique (50) de sorte que
le connecteur de phase (52) de la machine électrique (50) est reçu dans le passage (30) de l'unité de contrôle (10) en vis-à-vis du connecteur (20) de l'unité électronique de puissance (18) pour une connexion électrique avec ledit connecteur (20) de l'unité électronique de puissance (18).

13. Compresseur de suralimentation électrique (500) comprenant une roue de compression de gaz et un équipement électrique (510) selon la revendication 12 configuré de sorte à entrainer la roue de compression de gaz.

## Patentansprüche

1. Steuereinheit (10), die dazu bestimmt ist, eine elektrische Maschine (50) insbesondere für ein Kraftfahrzeug zu steuern, wobei die Steuereinheit (10) enthält:
- mindestens eine elektronische Leistungseinheit (18),
- ein Gehäuse (12), das eine Basis (16) enthält, die die mindestens eine elektronische Leistungseinheit (18) aufnimmt, wobei die elektronische Leistungseinheit (18) mindestens einen Verbinder (20) enthält, der dazu bestimmt ist, mit einem entsprechenden Verbinder (52) der elektrischen Maschine (50) elektrisch verbunden zu werden,
- einen das Gehäuse (12) schließenden Primärdeckel (14),
**dadurch gekennzeichnet, dass** die Steuereinheit (10) mindestens einen Durchlassdurchgang (30) zwischen der Basis (16) und dem Primärdeckel (14) enthält, durch den der Verbinder (20) der elektronischen Leistungseinheit (18) geht, und der dazu bestimmt ist, den entsprechenden Verbinder (52) der elektrischen Maschine (50) aufzunehmen, wobei der mindestens eine Durchlassdurchgang (30) eine Umfangswand (151, 152) enthält, die vom Primärdeckel (14) oder von der Basis (16) oder von beiden stammt.

2. Steuereinheit (10) nach dem vorhergehenden Anspruch, wobei der mindestens eine Durchlassdurchgang (30) mindestens ein Dichtungselement (32) um den Verbinder (20) der elektronischen Leistungseinheit (18) und der elektrischen Maschine (50) herum enthält, das angeordnet ist, um es zu ermöglichen, den Durchgang (30) gegenüber dem Inneren der Steuereinheit (10) abzudichten.

3. Steuereinheit (10) nach dem vorhergehenden Anspruch, wobei das mindestens eine Dichtungselement (32) angeordnet ist, um eine Dichtheit zwischen dem Primärdeckel (14) und der Basis (16) im Bereich des mindestens einen Durchlassdurchgangs (30) zu gewährleisten.

4. Steuereinheit (10) nach einem der vorhergehenden Ansprüche, wobei die Basis (16) des Gehäuses dazu bestimmt ist, an der elektrischen Maschine (50) befestigt zu werden.

5. Steuereinheit (10) nach einem der vorhergehenden Ansprüche, wobei der Primärdeckel (14) einen Hohlraum (15) im Bereich des mindestens einen Durchlassdurchgangs (30) enthält, wobei der Hohlraum (15) konfiguriert ist, den Zugang zu den Verbindern (20) der elektronischen Leistungseinheit (18) und der elektrischen Maschine (50) zu erlauben, insbesondere durch ein Schweißwerkzeug (40).

6. Steuereinheit (10) nach dem vorhergehenden Anspruch, die außerdem einen Sekundärdeckel (141) enthält, der es erlaubt, den Hohlraum (15) insbesondere dicht zu schließen.

7. Steuereinheit (10) nach einem der Ansprüche 5 oder 6, wobei der Hohlraum (15) zumindest zum Teil mit einem elektrisch und/oder thermisch isolierenden Werkstoff gefüllt ist.

8. Steuereinheit (10) nach einem der vorhergehenden Ansprüche, wobei der Primärdeckel (14) dicht an der Basis (16) des Gehäuses befestigt ist.

9. Steuereinheit (10) nach einem der vorhergehenden Ansprüche, wobei der mindestens eine Durchlassdurchgang (30) so nahe wie möglich den Verbindern (20, 52) der elektronischen Leistungseinheit (18) und der elektrischen Maschine (50) bemessen ist.

10. Steuereinheit (10) nach einem der vorhergehenden Ansprüche, wobei der mindestens eine Durchlassdurchgang (30) so bemessen ist, dass er einen Spielraum von weniger als 3 mm um die Verbinder (20, 52) der elektronischen Leistungseinheit (18) und der elektrischen Maschine (50) herum erlaubt.

11. Steuereinheit (10) nach einem der vorhergehenden Ansprüche, die dazu bestimmt ist, eine drehende elektrische Maschine (50) zu steuern, und wobei die Verbinder (20, 52) der elektronischen Leistungseinheit (18) und der elektrischen Maschine (50) Phasenverbinder sind.

12. Elektrische Ausrüstung (510), die enthält:
- eine drehende elektrische Maschine (50), die in einem Gehäuse untergebracht ist und mindestens einen Phasenverbinder (52) im Bereich ihrer Hauptachse aufweist,
- eine Steuereinheit (10) nach einem der Ansprüche 1 bis 11,
wobei das Gehäuse (12) der Steuereinheit (10) auf das Gehäuse der elektrischen Maschine (50) aufgesetzt ist, so dass der Phasenverbinder (52) der elektrischen Maschine (50) im Durchgang (30) der Steuereinheit (10) gegenüber dem Verbinder (20) der elektronischen Leistungseinheit (18) für eine elektrische Verbindung mit dem Verbinder (20) der elektronischen Leistungseinheit (18) aufgenommen wird.

13. Elektrischer Auflader (500), der ein Gasverdichterrad und eine elektrische Ausrüstung (510) nach Anspruch 12 enthält, die konfiguriert ist, das Gasverdichterrad anzutreiben.

## Claims

1. Control unit (10) intended to control an electrical machine (50), notably for a motor vehicle, the control unit (10) comprising:
- at least one power electronic unit (18),
- a housing (12) comprising a base (16) receiving said at least one power electronic unit (18), said power electronic unit (18) comprising at least one connector (20) intended to be connected electrically to a corresponding connector (52) of the electrical machine (50) ,
- a primary cover (14) closing the housing (12),
**characterized in that** the control unit (10) comprises at least one through passage (30) between the base (16) and the primary cover (14) through which said connector (20) of the power electronic unit (18) passes, and intended to receive the corresponding connector (52) of the electrical machine (50), said at least one through passage (30) comprising a peripheral wall (151, 152) deriving from the primary cover (14) or from the base (16) or from both.

2. Control unit (10) according to the preceding claim, wherein the at least one through passage (30) comprises at least one sealing element (32) around the connector (20) of the power electronic unit (18) and the electrical machine (50), disposed to allow said passage (30) to be made tight with respect to the interior of the control unit (10).

3. Control unit (10) according to the preceding claim, wherein the at least one sealing element (32) is disposed to ensure a seal between the primary cover (14) and the base (16) at the at least one through passage (30).

4. Control unit (10) according to any one of the preceding claims, wherein the base (16) of the housing is intended to be fixed to the electrical machine (50).

5. Control unit (10) according to any one of the preceding claims, wherein the primary cover (14) comprises a cavity (15) at the at least one through passage (30), said cavity (15) being configured to allow access to the connectors (20) of the power electronic unit (18) and of the electrical machine (50), notably by a welding tool (40).

6. Control unit (10) according to the preceding claim, further comprising a secondary cover (141) allowing said cavity (15) to be closed, notably tightly.

7. Control unit (10) according to one of Claims 5 and 6, wherein said cavity (15) is filled at least partly with an electrically and/or thermally insulating material.

8. Control unit (10) according to one of the preceding claims, wherein the primary cover (14) is fixed tightly to the base (16) of the housing.

9. Control unit (10) according to any one of the preceding claims, wherein the at least one through passage (30) is dimensioned as closely as possible to the connectors (20, 52) of the power electronic unit (18) and of the electrical machine (50).

10. Control unit (10) according to one of the preceding claims, wherein the at least one through passage (30) is dimensioned so as to allow a gap of at least 3 mm around the connectors (20, 52) of the power electronic unit (18) and of the electrical machine (50).

11. Control unit (10) according to one of the preceding claims, intended to control a rotating electrical machine (50) and wherein the connectors (20, 52) of the power electronic unit (18) and of the electrical machine (50) are phase connectors.

12. Electrical machine (510) comprising:
- a rotating electrical machine (50) housed in a housing, and comprising at least one phase connector (52) at its main axis,
- a control unit (10) according to one of Claims 1 to 11, wherein the housing (12) of the control unit (10) is added onto the housing of the electrical machine (50) so that
the phase connector (52) of the electrical machine (50) is received in the passage (30) of the control unit (10) opposite the connector (20) of the power electronic unit (18) for an electrical connection with said connector (20) of the power electronic unit (18).

13. Electrical supercharging compressor (500) comprising a gas compression wheel and electrical equipment (510) according to Claim 12 configured so as to drive the gas compression wheel.
